# EUROPÄISCHE PATENTSCHRIFT

(11) **EP 1 046 008 B1**
(45) Veröffentlichungstag und Bekanntmachung des Hinweises auf die Patenterteilung: **01.10.2003**
(21) Anmeldenummer: 99952240.2
(22) Anmeldetag: 31.07.1999
(51) Int. Cl.: F16S 5/00

(54) **MONTAGEELEMENT**
MOUNTING ELEMENT
ELEMENT DE MONTAGE

(30) Priorität: 21.08.1998 DE 19837976
(43) Veröffentlichungstag der Anmeldung: 25.10.2000
(73) Patentinhaber: ROBERT BOSCH GMBH, 70442 Stuttgart (DE)
(72) Erfinder: BENZ, Albrecht, D-70771 Leinfelden (DE); WALTHER, Joerg, D-70825 Korntal (DE); BUENNING, Torsten, D-70469 Stuttgart (DE); RAHNFELD, Frank, D-64385 Reichelsheim (DE); KLEMD, Olaf, D-71706 Markgroeningen (DE)
(86) Internationale Anmeldenummer: DE9902363
(87) Internationale Veröffentlichungsnummer: WO00011396

(56) Entgegenhaltungen:
- DE-U- 9 011 138
- DE-U- 29 718 526

## Beschreibung

### Stand der Technik

Die Erfindung geht aus von einem Montageelement nach der Gattung des Hauptanspruchs. Ein solches Montageelement ist beispielsweise aus dem DE-U-90 11 138.9 bekannt. An diesem Montageelement sind Abbrechzungen so ausgebildet, daß sie sich zu den Fügeflächen hin verbreitern. Die Breiten sind dabei so bemessen, daß die Abbrechzungen beim Ansetzen an ein Bauteil mit einer Ausnehmung, beispielsweise ein Profilstab mit einer Montagenut, etwas Spiel haben und nach dem vollständigen Einführen einen Preßsitz. Da die Oberflächen des Montageelements glatt sind und deshalb etwas rutschig sein können, kann es bei der Demontage insbesondere aufgrund des Preßsitzes der Abbrechzungen schwierig sein, das Montageelement wieder zu entfernen.

Das Montageelement läßt sich weiterhin, ohne eine bestimmte Ausrichtung zu beachten, nur befestigen, wenn die Abbrechzungen des Montageelements symmetrisch angeordnet sind. Ist dies nicht der Fall, so kann es sein, daß das Montageelement bei der Montage mit einer anderen Orientierung nochmals angesetzt werden muß.

### Vorteile der Erfindung

Das erfindungsgemäße Montageelement mit den kennzeichnenden Merkmalen des Hauptanspruchs hat demgegenüber den Vorteil, daß das Montageelement aufgrund von Vertiefungen in den Stegen besser mit den Händen zu fassen ist. Bei einer einseitigen Ausbildung von Vertiefungen am Montageelement ist außerdem eine einfache Ausrichtung des Montageelements gewährleistet. Die Vertiefungen sind leicht herstellbar, da an dem Druckgußwerkzeug für das Montageelement hierfür keine speziellen Schieber notwendig sind. Sind die Vertiefungen auch in einer Abdeckkappe ausgebildet, so läßt sich diese, insbesondere bei einer einseitigen Ausbildung leicht ausrichten. In den Vertiefungen lassen sich auch Markierungen anbringen, ohne daß diese überstehen.

Durch die in den Unteransprüchen aufgeführten Maßnahmen und Merkmale sind besondere Weiterbildungen des im Hauptanspruch angegebenen Montageelements beschrieben.

### Zeichnung

Ein Ausführungsbeispiel der Erfindung ist in der Zeichnung dargestellt und in der nachfolgenden Beschreibung näher erläutert. Es zeigen Figur 1 als erstes Ausführungsbeispiel eine perspektivische Explosionsdarstellung eines Montageelements mit fünf Vertiefungen und einer Kappe, Figur 2 eine perspektivische Explosionsdarstellung eines abgewandelten Montageelements und einer abgewandelten Kappe mit fünf Vertiefungen und Figur 3 eine perspektivische Explosionsdarstellung eines abgewandelten Montageelements und einer abgewandelten Kappe mit je drei Vertiefungen.

### Beschreibung des Ausführungsbeispiels

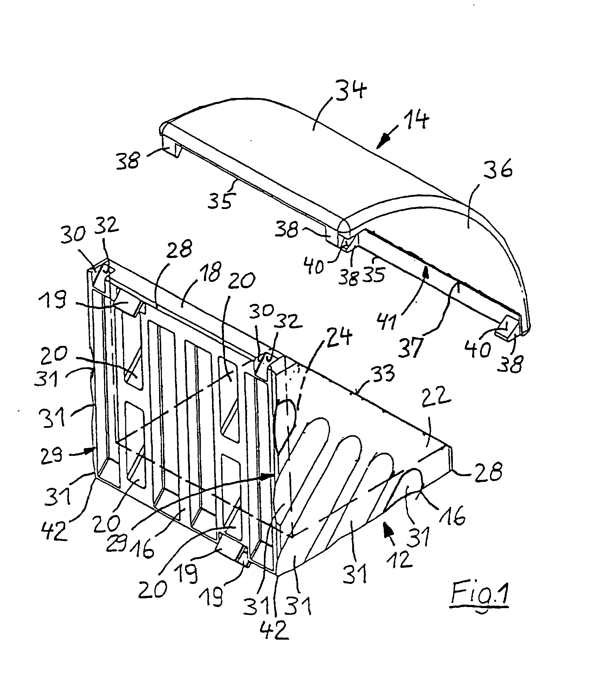

Ein in der Figur 1 gezeigtes Montageelement 12 dient zur Befestigung von Bauteilen mit Ausnehmungen, insbesondere Profilstäben mit Montagenuten, die in der Zeichnung nicht dargestellt sind. Das Montageelement 12 dient als Befestigungswinkel und ist vorzugsweise als ein Druckgußteil ausgebildet. Mit dem in der Figur 1 dargestellten Montageelement 12 lassen sich zwei Bauteile im rechten Winkel zueinander verbinden.

Das Montageelement 12 weist Fügeflächen 16 für die zu verbindenden Bauteile auf, die an zwei vorzugsweise im rechten Winkel zueinander stehenden Wänden 18 ausgebildet sind. Aus jeder Fügefläche 16 ragen eine oder mehrere, in der Figur 1 zwei z. B. schräg angeordnete Abbrechzungen 19 hervor, die mit Ausnehmungen der Bauteile in Eingriff bringbar sind und so eine Verdrehsicherung bilden. In jeder Wand 18 sind Durchbrüche 20 zur Durchführung von Befestigungselementen, wie zum Beispiel Schrauben, für die Bauteile ausgebildet. Ferner sind im vorliegenden Ausführungsbeispiel zwischen den Wänden 18 zwei seitliche Stege 22 zur Erhöhung der mechanischen Festigkeit des Montageelements 12 vorhanden, von denen jedoch aufgrund der perspektivischen Darstellung nur einer sichtbar ist. Die Wände 18 und die Stege 22 bilden eine Ausnehmung 24, die in der Figur 1 durch gestrichelte Linien angedeutet ist.

An zwei voneinander weg weisenden Kanten 28 der Fügeflächen 16 sind je Kante 28 zwei Aussparungen 30 ausgebildet, die Montageflächen 32 aufweisen. Im dargestellten Ausführungsbeispiel sind somit insgesamt vier Aussparungen 30 vorhanden. Es ist jedoch auch möglich, je Kante 28 nur eine Aussparung 30 oder mehr als zwei vorzusehen.

Wie aus der Figur 1 weiterhin hervorgeht, sind in beiden seitlichen Stegen 22 vorteilhafterweise fünf Vertiefungen 31 vorgesehen, die von an die seitlichen Stege 22 angrenzenden Randbereichen 29 der Fügeflächen 16 ausgehen. Vertiefungen 31 ergeben eine besonders gute Griffigkeit. Hierzu ist die Größe der Vertiefungen 31 idealerweise so bemessen, daß sie gut mit Fingern zu fassen sind. Vorzugsweise verlaufen die Vertiefungen 31 parallel zueinander und sind darüber hinaus parallel zur Winkelhalbierenden eines von den Fügeflächen 16 bzw. den Wänden 18 gebildeten Winkels angeordnet. Von den fünf Vertiefungen 31 geht vorteilhafterweise die mittlere von dem von den Randbereichen 29 der Fügeflächen 16 gebildeten Schnittbereich 42 aus. Es ist auch möglich, nur in einem seitlichen Steg 22 fünf Vertiefungen 31 bzw. mehr oder weniger als fünf Vertiefungen 31 vorzusehen. Die Vertiefungen 31 haben im vorliegenden Ausführungsbeispiel die Querschnittsfläche eines Kreissegments und enden an den von den Fügeflächen 16 entfernten Seiten kugelsegmentförmig, d.h. daß in diesem Bereich die von den Vertiefungen 31 und den Stegen 22 gebildeten Kanten die Form eines Halbkreises haben. Es ist auch möglich, daß die Vertiefungen 31 eine eckige Querschnittsfläche haben. Die fünf Vertiefungen 31 enden auf einer Linie, die parallel zu den Stirnflächen 33 der Stege 22 verläuft. Es ist jedoch auch möglich Vertiefungen 31 vorzusehen, die nicht auf einer solchen Linie enden. Jedenfalls sollte in mindestens einem seitlichen Steg 22 des Montageelements 12 wenigstens eine Vertiefung 31 vorgesehen sein, die von wenigstens einem, an den mindestens einen seitlichen Steg 22 angrenzenden Randbereich 29 mindestens einer Fügefläche 16 ausgeht.

Zur Abdeckung der Ausnehmung 24 des Montageelements 12 dient eine Kappe 14, die ein bogenförmig gewölbtes Abdeckteil 34 und zwei seitliche Stege 36 aufweist, welche die Kappe 14 verstärken. Die Kappe 14 ist vorteilhafterweise als Kunststoffspritzgußteil ausgebildet und elastisch aber dennoch sehr stabil. Der äußere Abstand der Stege 36 der Kappe 14 entspricht dem äußeren Abstand der Stege 22 des Montageelements 12. Bei einem Montageelement 12, das nur einen seitlichen Steg 22 aufweist, ist der Steg 36 der Kappe 14, der auf der Seite ohne Steg 22 liegt, so geformt, daß er an den Wänden 18 anliegt. Bei einem Montageelement 12 ohne Stege 22 sind beide Stege 36 der Kappe 14 so geformt. Ist die Kappe 14 auf das Montageelement 12 montiert, so entspricht eine Kontur einer Seitenansicht im wesentlichen einem Viertelkreis. Hierdurch ergibt sich in vorteilhafter Weise ein großer Raum, der ausreichend Platz für Befestigungsmittel bietet. Es ist jedoch auch möglich, eine Kappe 14 mit einem Abdeckteil 34 vorzusehen, das nicht bogenförmig, sonder anders geformt ist, beispielsweise so, daß das Montageelement 12 und die montierte Kappe 14 im wesentlichen eine Quaderform ergeben. Es ist auch möglich die Kappe 14 flach auszubilden, das heißt, daß sie mit einer Fläche flach auf den Stegen 22 des Montageelements 12 aufliegt.

An gegenüberliegenden und voneinander weg weisenden Kanten 35 des Abdeckteils 34 sind je Kante 35 zwei Fortsätze 38 ausgebildet, die Montageflächen 40 aufweisen. Die Fortsätze 38 sind klein und kompakt, wodurch sie gegenüber dem Abdeckteil 34 biegesteif sind. Es sind so viele Fortsätze 38 vorhanden wie Aussparungen 30. Die Fortsätze 38 sind so ausgebildet, daß sie mit den Aussparungen 30 formschlüssig zusammenwirken. Vorteilhafterweise ist der Abstand der Aussparungen 30 größer als der Abstand der Fortsätze 38. Die Fortsätze 38 bzw. die Montageflächen 40 haben eine Breite, die so bemessen ist, daß sie mit etwas Spiel in die Aussparungen 30 passen.

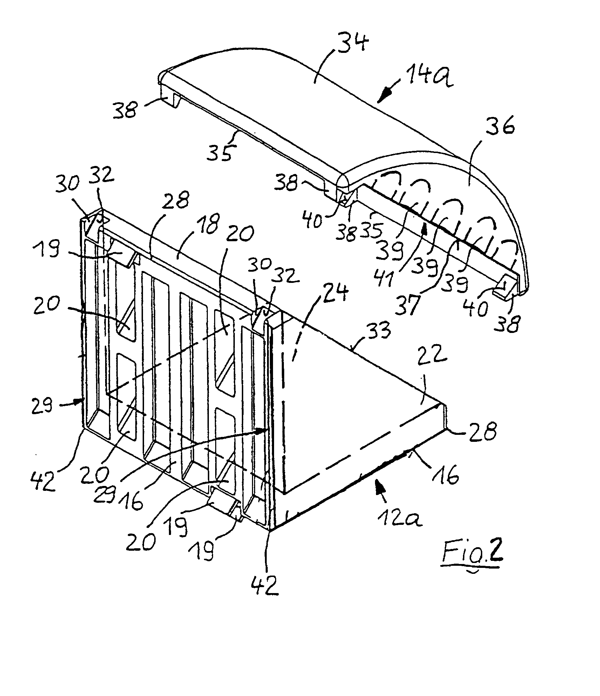

Wie an Hand der Figur 2 ersichtlich ist, können in den seitlichen Stegen 36 der Kappe 14a Vertiefungen 39 vorgesehen sein. Ihre Anzahl beträgt im vorliegenden Ausführungsbeispiel fünf, wobei auch mehr oder weniger Vertiefungen möglich sind. Das Montageelement 12a weist hier keine Vertiefungen 31 auf. Dies ist zum Beispiel möglich, wenn das Montageelement 12a Abbrechzungen 19 hat, die so angeordnet sind, daß es keiner besonderen Ausrichtung des Montageelements 12a bedarf, wenn die Abbrechzungen 19 so bemessen sind, daß sie nach der Montage keinen Preßsitz haben oder wenn überhaupt gar keine Abbrechzungen 19 vorhanden sind. Die alleine an der Kappe 14a vorgesehenen Vertiefungen 39 ermöglichen dann, wie bereits erwähnt, eine bessere Griffigkeit der Kappe 14a. Die Vertiefungen 39 gehen von an den Stegen 36 angrenzenden Randbereichen 41 der Stirnflächen 37 der Stege 36 aus. Im gezeigten Ausführungsbeispiel enden die Vertiefungen 39 nicht auf einer Linie, die parallel zu den Stirnflächen 37 der Stege 36 verläuft. Sie können jedoch ebenfalls auf einer Linie enden, die parallel zu den Stirnflächen 37 der Stege 36 verläuft.

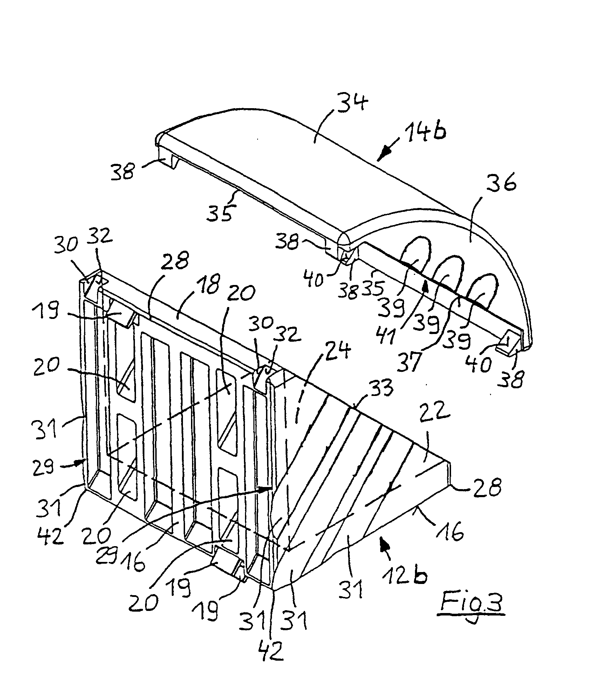

Wie an Hand der Linien in der Figur 3 ersichtlich ist, können in den seitlichen Stegen 36 der Kappe 14b drei Vertiefungen 39 vorgesehen sein, was der Anzahl an den Vertiefungen 31 des Montageelements 12b entspricht. Diese Anzahl ist insbesondere bei kleineren Montageelementen 12a und Kappen 14a vorteilhaft, da die Größe der Vertiefungen 31, wodurch die Vertiefungen 31 gut mit Fingern zu fassen sind, beibehalten werden kann. Die Vertiefungen 39 gehen von an den Stegen 36 angrenzenden Randbereichen 41 der Stirnflächen 37 der Stege 36 aus, wobei im vorliegenden die Vertiefungen 39 der Kappe 14a mit denen des Montageelements 12a fluchten. Im gezeigten Ausführungsbeispiel enden die Vertiefungen 39 auf einer Linie, die parallel zu den Stirnflächen 37 der Stege 36 verläuft. Die Vertiefungen 31 des Montageelements 12b verlaufen in diesem Fall durchgehend bis zu den Stirnflächen 37 der Stege 22.

Sind die Vertiefungen 31 des Montageelements 12, 12a, 12b nur an einem seitlichen Steg 22 ausgebildet und sind die Abbrechzungen 19 des Montageelements 12, 12a, 12b unsymmetrisch angeordnet, so erleichtern die Vertiefungen 31 die Ausrichtung des Montageelements 12, 12a, 12b. Bei einer einseitigen Ausbildung sowohl am Montageelement 12, 12a, 12b als auch an der Kappe 14, 14a, 14b trifft dies genauso zu. Außerdem lassen sich das Montageelement 12, 12a, 12b und die Kappe 14, 14a, 14b durch die Vertiefungen 31 bzw. 39 besser fassen. Dieser Effekt wird besonders bei einer Ausbildung der Vertiefungen 31, 39 an beiden Stegen 22 des Montageelements 12, 12a, 12b bzw. beiden Stegen 36 der Kappe 14, 14a, 14b verstärkt. Es ist auch möglich, an den Stegen 22, 36 unterschiedlich viele Vertiefungen 31 bzw. 39 auszubilden; beispielsweise an einer Seite eine Vertiefung 31, 39 und an der andern Seite fünf Vertiefungen 31, 39. Dadurch ist eine gute Griffigkeit und Orientierung gegeben. Zumindest sollte jedoch in mindestens einem seitlichen Steg 36 der Kappe 14, 14a, 14b wenigstens eine Vertiefung 39 vorgesehen sein, die vom an den Steg 36 angrenzenden Randbereich 41 der Stirnfläche 37 des Stegs 36 ausgeht.

Bei der Montage der Kappe 14, 14a, 14b auf das bereits an Bauteilen festgeschraubte Montageelement 12, 12a, 12b werden beispielsweise zuerst die Fortsätze 38 einer Kante 35 des Abdeckteils 34 der Kappe 14, 14a, 14b in die Aussparungen 30 einer Kante 28 des Montageelements 12, 12a, 12b gesteckt. Dann wird die Kappe 14, 14a, 14b an die Stirnflächen 33 der Stege 22 des Montageelements 12, 12a, 12b gedrückt. Dadurch biegt sich die Kappe 14, 14a, 14b auf, und die Fortsätze 38 der anderen Kante 35 des Abdeckteils 34 der Kappe-14, 14a, 14b greifen in die Aussparungen 30 des Montageelements 12, 12a, 12b ein. Die sich gegenüberliegenden Montageflächen 32 des Montageelements 12, 12a, 12b verlaufen nicht parallel sondern schräg, so daß sich ein Hinterschnitt ergibt. Die Montageflächen 40 der Kappe 14, 14a, 14b verlaufen ebenfalls schräg, so daß die Kappe 14, 14a, 14b das Montageelement mit Hilfe der Montageflächen 40 formschlüssig umgreift. Da der Abstand der Montageflächen 32 der Aussparungen 30 größer ist als der Abstand der Montageflächen 40 der Fortsätze 38 hält die Kappe 14, 14a, 14b besonders gut am Montageelement 12, 12a, 12b, wodurch ein sicherer Halt der Kappe 14, 14a, 14b am Montageelement 12, 12a, 12b gewährleistet ist.

Die Aussparungen 30 müssen nicht unbedingt an Kanten 28 der Fügeflächen 16 ausgebildet sein. Es ist auch möglich, sie an anderen Kanten beispielsweise an denen der Stege 22 vorzusehen. Die Fortsätze 38 müssen dann an der Kappe 14, 14a, 14b passend angeordnet werden. Durch die Ausbildung der Aussparungen 30 und der Fortsätze 38 an den Kanten 28 bzw. 35 ist es möglich, daß die Fortsätze 38 sehr klein sind. Da die Fortsätze 38 gegenüber der Kappe 14, 14a, 14b klein und kompakt sind, sind sie biegesteifer als die Kappe 14, 14a, 14b und verbiegen sich bei der Montage und Demontage nicht. Bei der Montage und Demontage verformt sich also nur die Kappe 14, 14a, 14b bzw. das Abdeckteil 34 und nicht die Fortsätze 38. Dadurch ist die Gefahr eliminiert, daß die Fortsätze 38 durch häufiges Biegen bei der Montage und Demontage abbrechen.

## Patentansprüche

1. Montageelement (12) mit Fügeflächen (16), die an Wänden (18) ausgebildet sind, zwischen denen mindestens ein seitlicher Steg (22) ausgebildet ist, **dadurch gekennzeichnet, daß** im mindestens einen seitlichen Steg (22) des Montageelements (12) wenigstens eine Vertiefung (31) vorgesehen ist, die von wenigstens einem, an den mindestens einen seitlichen Steg (22) angrenzenden Randbereich (29) mindestens einer Fügefläche (16) ausgeht.

2. Montageelement (12a) mit Fügeflächen (16), die an Wänden (18) ausgebildet sind, und mit einer Kappe (14a), die mindestens einen seitlichen Steg (36) aufweist, **dadurch gekennzeichnet, daß** im mindestens einen seitlichen Steg (36) der Kappe (14a) wenigstens eine Vertiefung (39) vorgesehen ist, die vom an den Steg (36) angrenzenden Randbereich (41) der Stirnfläche (37) des Stegs (36) ausgeht.

3. Montageelement (12b) mit Fügeflächen (16), die an Wänden (18) ausgebildet sind, zwischen denen mindestens ein seitlicher Steg (22) ausgebildet ist, und mit einer Kappe (14b), die mindestens einen seitlichen Steg (36) aufweist, **dadurch gekennzeichnet, daß** im mindestens einen seitlichen Steg (22) des Montageelements (12b) wenigstens eine Vertiefung (31) vorgesehen ist, die von wenigstens einem, an den mindestens einen seitlichen Steg (22) angrenzenden Randbereich (29) mindestens einer Fügefläche (16) ausgeht, daß im mindestens einen seitlichen Steg (36) der Kappe (14b) wenigstens eine Vertiefung (39) vorgesehen ist, die vom an den Steg (36) angrenzenden Randbereich (41) der Stirnfläche (37) des Stegs (36) ausgeht, und daß wenigstens eine Vertiefung (31) des Montageelements (14b) mit wenigstens einer Vertiefung (39) der Kappe (14b) fluchtet.

4. Montageelement (12, 12a, 12b) nach einem der Ansprüche 1 bis 3, **dadurch gekennzeichnet, daß** die wenigstens eine Vertiefung (31, 39) parallel zu einer Winkelhalbierenden eines von den Fügeflächen (16) gebildeten Winkels verläuft.

5. Montageelement (12, 12a, 12b) nach einem der Ansprüche 1 bis 4, **dadurch gekennzeichnet, daß** die mindestens eine Vertiefung (31, 39) die Querschnittsfläche eines Kreissegmentes hat.

6. Montageelement (12, 12a, 12b) nach einem der Ansprüche 1 bis 4, **dadurch gekennzeichnet, daß** die mindestens eine Vertiefung (31, 39) eine eckige Querschnittsfläche hat.

7. Montageelement (12, 12a, 12b) nach einem der Ansprüche 1 bis 5, **dadurch gekennzeichnet, daß** in jedem Steg (22, 36) mehrere Vertiefungen (31, 39) vorgesehen sind, die parallel zueinander verlaufen

8. Montageelement (12, 12a, 12b) nach Anspruch 7, **dadurch gekennzeichnet, daß** von mehreren Vertiefungen (31) die mittlere von dem von den Randbereichen (29) der Fügeflächen (16) gebildeten Schnittbereich (42) ausgeht.

9. Montageelement (12) nach einem der Ansprüche 1 bis 8, **dadurch gekennzeichnet, daß** in jedem Steg (22, 36) fünf Vertiefungen (31, 39) vorgesehenen sind.

10. Montageelement (12a) nach einem der Ansprüche 1 bis 8, **dadurch gekennzeichnet, daß** in jedem Steg (22, 36) drei Vertiefungen (31, 39) vorgesehenen sind.

11. Montageelement (12, 12a, 12b) nach einem der Ansprüche 1 bis 10, **dadurch gekennzeichnet, daß** Vertiefungen (31, 39) vorgesehen sind, die auf einer Linie enden, die parallel zu den Stirnflächen (33, 37) der Stege (22, 36) verläuft.

12. Montageelement (12, 12a, 12b) nach einem der Ansprüche 1 bis 10, **dadurch gekennzeichnet, daß** Vertiefungen (31, 39) vorgesehen sind, die nicht auf einer Linie enden, die parallel zu den Stirnflächen (33, 37) der Stege (22, 36) verläuft.

13. Montageelement (12, 12a, 12b) nach einem der Ansprüche 1 bis 12, **dadurch gekennzeichnet, daß** an dem Montageelement (12, 12a, 12b) wenigstens zwei gegenüberliegende Aussparungen (30) ausgebildet sind, die einen ersten Abstand aufweisen, daß an der Kappe (14, 14a, 14b) mindestens zwei gegenüberliegende Fortsätze (38) angeformt sind, die einen zweiten Abstand aufweisen und die mit den Aussparungen (30) zusammenwirken, wobei der erste Abstand der Aussparungen (30) größer ist als der zweite Abstand der Fortsätze (38), daß die Kappe (14, 14a, 14b) elastisch ist und die mindestens zwei Fortsätze (38) gegenüber der Kappe (14, 14a, 14b) biegesteif sind, und daß die Kappe (14, 14a, 14b) das Montageelement (12, 12a, 12b) mit Hilfe der Fortsätze (38) umgreift.

14. Montageelement (12, 12a, 12b) nach Anspruch 13, **dadurch gekennzeichnet, daß** die Aussparungen (30) an voneinander weg weisenden Kanten (28) der Fügeflächen (16) ausgebildet sind.

15. Montageelement (12, 12a, 12b) nach einem der Ansprüche 1 bis 14, **dadurch gekennzeichnet, daß** eine Kontur einer Seitenansicht mit einer montierten Kappe (14, 14a, 14b) im wesentlichen einem Viertelkreis entspricht.

## Claims

1. Mounting element (12) having joining surfaces (16) which are formed on walls (18) between which at least one lateral web (22) is formed, **characterized in that** at least one depression (31) is provided in the at least one lateral web (22) of the mounting element (12), the said depression (31) originating from at least one peripheral region (29) of at least one joining surface (16), which peripheral region (29) is adjacent to the at least one lateral web (22).

2. Mounting element (12a) having joining surfaces (16) which are formed on walls (18), and having a cap (14a) which has at least one lateral web (36), **characterized in that** at least one depression (39) is provided in the at least one lateral web (36) of the cap (14a), the said depression (39) originating from the peripheral region (41) of the end surface (37) of the web (36), which peripheral region (41) is adjacent to the web (36).

3. Mounting element (12b) having joining surfaces (16) which are formed on walls (18) between which at least one lateral web (22) is formed, and having a cap (14b) which has at least one lateral web (36), **characterized in that** at least one depression (31) is provided in the at least one lateral web (22) of the mounting element (12b), the said depression (31) originating from at least one peripheral region (29) of at least one joining surface (16), which peripheral region (29) is adjacent to the at least one lateral web (22), **in that** at least one depression (39) is provided in the at least one lateral web (36) of the cap (14b), the said depression (39) originating from the peripheral region (41) of the end surface (37) of the web (36), which peripheral region (41) is adjacent to the web (36), and **in that** at least one depression (31) of the mounting element (14b) is aligned with at least one depression (39) of the cap (14b).

4. Mounting element (12, 12a, 12b) according to one of Claims 1 to 3, **characterized in that** the at least one depression (31, 39) runs parallel to a bisecting line of an angle formed by the joining surfaces (16).

5. Mounting element (12, 12a, 12b) according to one of Claims 1 to 4, **characterized in that** the at least one depression (31, 39) has the cross-sectional surface of a segment of a circle.

6. Mounting element (12, 12a, 12b) according to one of Claims 1 to 4, **characterized in that** the at least one depression (31, 39) has a polygonal cross-section surface.

7. Mounting element (12, 12a, 12b) according to one of Claims 1 to 5, **characterized in that** a plurality of depressions (31, 39) which run parallel to one another are provided in each web (22, 36).

8. Mounting element (12, 12a, 12b) according to Claim 7, **characterized in that** the central depression of a plurality of depressions (31) originates from the sectional region (42) formed by the peripheral regions (29) of the joining surfaces (16).

9. Mounting element (12) according to one of Claims 1 to 8, **characterized in that** five depressions (31, 39) are provided in each web (22, 36).

10. Mounting element (12a) according to one of Claims 1 to 8, **characterized in that** three depressions (31, 39) are provided in each web (22, 36).

11. Mounting element (12, 12a, 12b) according to one of Claims 1 to 10, **characterized in that** depressions (31, 39) which end on a line running parallel to the end surfaces (33, 37) of the webs (22, 36) are provided.

12. Mounting element (12, 12a, 12b) according to one of Claims 1 to 10, **characterized in that** depressions (31, 39) which do not end on a line running parallel to the end surfaces (33, 37) of the webs (22, 36) are provided.

13. Mounting element (12, 12a, 12b) according to one of Claims 1 to 12, **characterized in that** at least two opposite cutouts (30) which are at a first distance from one another are formed on the mounting element (12, 12a, 12b), **in that** at least two opposite extensions (38) which are at a second distance from one another and which interact with the cutouts (30) are integrally formed on the cap (14, 14a, 14b), with the first distance between the cutouts (13) being larger than the second distance between the extensions (38), **in that** the cap (14, 14a, 14b) is elastic and the at least two extensions (38) are flexurally rigid relative to the cap (14, 14a, 14b), and **in that** the cap (14, 14a, 14b) fits around the mounting element (12, 12a, 12b) with the aid of the extensions (38).

14. Mounting element (12, 12a, 12b) according to Claim 13, **characterized in that** the cutouts (30) are formed on edges (28) pointing away from each other of the joining surfaces (16).

15. Mounting element (12, 12a, 12b) according to one of Claims 1 to 14, **characterized in that** a contour of a side view with a fitted cap (14, 14a, 14b) corresponds essentially to a quarter-circle.

## Revendications

1. Elément de montage (12) comportant des surfaces de joint (16) constituées sur des parois (18) entre lesquelles est formée au moins une entretoise latérale (22),
**caractérisé en ce que**
dans au moins une entretoise latérale (22) de l'élément de montage (12) est prévue au moins un creux (31) qui part d'au moins une zone de bord (29) adjacente à au moins une entretoise latérale (22), d'au moins une surface de joint (16).

2. Elément de montage (12a) comportant des surfaces de joint (16) constituées sur des parois (18), ainsi qu'un chapeau (14a) qui présente au moins une entretoise latérale (36),
**caractérisé en ce que**
dans au moins une entretoise latérale (36) du chapeau (14a) est prévu au moins un creux (39) qui part de la zone de bord (41) adjacente à l'entretoise (36), de la surface frontale (37) de l'entretoise (36).

3. Elément de montage (12b) comportant des surfaces de joint (16) constituées sur des parois (18) entre lesquelles est constituée au moins une entretoise latérale (22), ainsi qu'un chapeau (14b) qui présente au moins une entretoise latérale (36),
**caractérisé en ce que**
dans au moins une entretoise latérale (22) de l'élément de montage (1b) est prévu au moins un creux (31) qui part d'au moins une zone de bord (29) adjacente à au moins une entretoise latérale (22), d'au moins une surface de joint (16), dans au moins une entretoise latérale (36) du chapeau (14b) est prévu au moins un creux (39) qui part de la zone de bord (41) adjacente à l'entretoise (36), de la surface frontale (37) de l'entretoise (36), et au moins un creux (31) de l'élément de montage (14b) affleure au moins un creux (39) du chapeau (14b).

4. Elément de montage (12, 12a, 12b) selon l'une des revendications 1 à 3,
**caractérisé en ce qu'**
au moins un creux (31, 39) est parallèle à une bissectrice d'un angle formé par les surfaces de joint (16).

5. Elément de montage (12, 12a, 12b) selon l'une des revendications 1 à 4,
**caractérisé en ce qu'**
au moins un creux (31, 39) présente une surface de section transversale d'un segment de cercle.

6. Elément de montage (12, 12a, 12b) selon l'une des revendications 1 à 4,
**caractérisé en ce qu'**
au moins un creux (31, 39) présente une surface de section transversale polygonale.

7. Elément de montage (12, 12a, 12b) selon l'une des revendications 1 à 5,
**caractérisé en ce que**
dans chaque entretoise (22, 36), sont prévues plusieurs creux (31, 39) parallèles entre eux.

8. Elément de montage (12, 12a, 12b) selon la revendication 7,
**caractérisé** en que
parmi plusieurs creux (31), celui qui se trouve au centre part de la zone de coupe (42) formée par les zones de bord (29) des surfaces de joint (16).

9. Elément de montage (12) selon l'une des revendications 1 à 8,
**caractérisé en ce que**
dans chacune des entretoises (22, 36), sont prévus cinq creux (31, 39).

10. Elément de montage (12) selon l'une des revendications 1 à 8,
**caractérisé en ce que**
dans chacune des entretoises (22, 36), sont prévus trois creux (31, 39).

11. Elément de montage (12, 12a, 12b) selon l'une des revendications 1 à 10,
**caractérisé par**
des creux (31, 39) qui se terminent sur une ligne parallèle aux surfaces frontales (33, 37) des entretoises (22, 36).

12. Elément de montage (12, 12a, 12b) selon l'une des revendications 1 à 10,
**caractérisé par**
des creux (31, 39) qui ne se terminent pas sur une ligne parallèle aux surfaces frontales (33, 37) des entretoises (22, 36).

13. Elément de montage (12, 12a, 12b) selon l'une des revendications 1 à 12,
**caractérisé en ce que**
sur l'élément de montage (12, 12a, 12b) sont constitués au moins deux évidements (30) se faisant face qui présentent un premier écartement, sur le chapeau (14, 14a, 14b) sont moulées au moins deux prolongations (38) se faisant face qui présentent un second écartement et qui agissent de concert avec les évidements (30), le premier écartement entre les évidements (30) étant supérieur au second écartement entre les prolongations (38), le chapeau (14, 14a, 14 b) est élastique et au moins deux prolongations (38) sont résistantes à la flexion vis-à-vis du chapeau (14, 14a, 14 b), et le chapeau (14, 14a, 14 b) enveloppe l'élément de montage (12, 12a, 12b) à l'aide des prolongations (38).

14. Elément de montage (12, 12a, 12b) selon la revendication 13,
**caractérisé en ce que**
les évidements (30) sont constitués sur des arêtes (28), orientées de manière à s'écarter entre elles, des surfaces de joint (16).

15. Elément de montage (12, 12a, 12b) selon l'une des revendications 1 à 14,
**caractérisé en ce qu'**
un contour d'une vue latérale, avec un chapeau (14, 14a, 14b) monté, correspond essentiellement à un quart de cercle.
